Europäisches Patentamt

European Patent Office

Office européen des brevets

(19)

(11) Veröffentlichungsnummer: **0 147 424**
**B1**

(12) # EUROPÄISCHE PATENTSCHRIFT

(45) Veröffentlichungstag der Patentschrift:
20.05.87

(51) Int. Cl.⁴: **F 01 N 3/02,** B 01 D 51/02,
B 03 C 3/06, B 03 C 3/70

(21) Anmeldenummer: 84901973.2

(22) Anmeldetag: 19.05.84

(86) Internationale Anmeldenummer:
PCT/DE 84/00112

(87) Internationale Veröffentlichungsnummer:
WO 85/00406 (31.01.85 Gazette 85/03)

(54) VORRICHTUNG ZUM REINIGEN VON GASEN.

(30) Priorität: 02.07.83 DE 3323926

(43) Veröffentlichungstag der Anmeldung:
10.07.85 Patentblatt 85/28

(45) Bekanntmachung des Hinweises auf die Patenterteilung:
20.05.87 Patentblatt 87/21

(84) Benannte Vertragsstaaten:
AT CH DE FR GB LI SE

(56) Entgegenhaltungen:
DE-C-497 061
GB-A-1 022 714
US-A-4 077 784
US-A-4 116 790

(73) Patentinhaber: ROBERT BOSCH GMBH, Robert-Bosch- Platz 1, D-7016 Gerlingen- Schillerhöhe (DE)

(72) Erfinder: BRAUER, Ilan, Zellerstrasse 76, D-7000 Stuttgart 1 (DE)
Erfinder: GAUGLER, Manfred, Wilhelm- Lächele- Strasse 10, D-7141 Freiberg (DE)
Erfinder: KARR, Dieter, Hans- Reyhing- Strasse 47, D-7150 Leonberg (DE)

EP 0 147 424 B1

LIBER, STOCKHOLM 1987

## Beschreibung

Die Erfindung geht aus von einer Vorrichtung nach der Gattung des Anspruchs 1. Bei einer solchen durch die US-PS 4 776 790 bekannten Vorrichtung wird in einem langgestreckten Rohr zwischen einer stabförmigen Mittelelektrode und dem geerdeten Rohrmantel ein elektrisches Feld erzeugt, in dem fein verteilte Flüssigkeitströpfchen, die sich in einer Trägerflüssigkeit befinden, zu größeren Flüssigkeitströpfchen agglomeriert werden, die dann in einem nachgeschalteten Fliehkraftabscheider von der Trägerflüssigkeit getrennt werden. Eine der Flüssigkeiten ist Wasser. Dabei muß mit einem erheblichen Energieaufwand gerechnet werden, da eine einwandfreie Isolation nicht mehr gewährleistet ist, da energieraubende Kriechströme und schließlich Kurzschlüsse zwischen den Elektroden auftreten können. Auch ist ein kontinuierlicher, störungsfreier Betrieb der Vorrichtung mit gesichertem Reinigungsergebnis deshalb in Frage gestellt. Die bekannte Vorrichtung zeigt insbesondere keine Lösung, wie Kriechströme im Bereich der die Wand des langgestreckten Rohres durchdringenden Spannungszufuhr zur Mittelelektrode verhindert werden sollen.

Durch die US-A- 4 077 784 ist zwar eine Vorrichtung bekannt, die Merkmale des Kennzeichens des Anspruchs 7 aufweist, doch hat diese Vorrichtung nur im Bereich eines von vielen Elektrodenelementen Einströmöffnungen des zu reinigenden Gases. Die dort einströmende Luft durchläuft im Schnitt gesehen eine mäanderförmige Strecke von außen zur zentrischen Mitte der aus konzentrisch zueinander angeordneten, becherförmigen Elektrodenelementen bestehenden und ineinandergreifenden Elektrodengruppen. Aus dieser zentrischen Mitte strömt die Luft über ein Rückschlagventil ab. Dabei sollen die von der Luft getragenen Verunreinigungen sich an den Elektroden abscheiden und es muß die Vorrichtung durch Demontage einer der Elektrodengruppen in Zeitabständen gereinigt werden. Auch hier besteht eine erhebliche Gefahr, daß sich entlang der Ablagerungen an den Elektroden und den Vorrichtungswänden elektrische Brücken bilden, die zu Kriechströmen und Kurzschlüssen und damit zu hohem Energiebedarf und zu Störungen führen. Ein kontinuierlicher Betrieb ist mit dieser Vorrichtung ebenfalls nicht möglich, da eine kontinuierliche Entsorgung der Vorrichtung nicht gewährleistet ist.

Aufgabe der Erfindung ist es, ausgehend von den eingangs bekannten Vorrichtungen, eine Vorrichtung zum Reinigen von Gasen zu schaffen, die für einen kontinuierlichen Betrieb geeignet ist und bei der bei sehr kompakter Bauweise mit geringem Aufwand eine einwandfreie elektrische Isolation zwischen den Elektroden sichergestellt wird.

Die Lösung dieser Aufgabe gemäß dem Kennzeichen des Anspruchs 7 hat den Vorteil, daß die auf unterschiedlichem Hochspannungspotential liegenden Elektroden trotz räumlich dicht benachbarter Anordnung mit den gewünschten hohen Feldstärken sicher voneinander getrennt sind und Verluste durch Kriechströme praktisch nicht mehr auftreten. Es muß nur noch eine der Elektrodengruppen elektrisch isoliert werden, was den Bereich, der von Kriechströmen freizuhalten ist, verkleinert. Dadurch, daß im Bereich der Isolation des Trägers der einen Elektrodengruppe in das Gehäuse Spülgas eingelassen wird, das zum zu reinigenden Abgasstrom entgegengesetzt gerichtet ist, wird erreicht, daß Ablagerungen der elektrisch leitfähigen Partikel im Bereich der elektrischen Isolation zwischen den Hochspannungspotentialen ausgeschlossen sind.

Ein weiterer Vorteil ist, daß die zu reinigenden Gase mehrfach umgelenkt werden, wodurch eine Verwirbelung der Gase und somit eine Erhöhung der Agglomeratbildung bewirkt wird. Dabei wird eine gleichmäßige, im wesentlichen konstante Strömungsgeschwindigkeit durch das Ineinanderschachteln der verschiedenen Elektrodengruppen erreicht und dadurch, daß ein kurzschließender Durchtritt der Gase durch die Öffnungen an mehreren einander benachbarten Elektrodenelementen zu den von diesen begrenzten Teilräumen vorgesehen ist. Die konzentrischen Teilräume sind so parallel geschaltet, daß die äußeren beiden Teilräume oder Kanäle und die inneren drei Kanäle die gleiche Querschnittsfläche besitzen und eine konstante Strömungsgeschwindigkeit des Gases in der gesamten Vorrichtung erzielt wird.

Dadurch, daß sich der Einlaß für das zu reinigende Gas und der Auslaß zum nachgeschalteten mechanischen Abscheider auf der gleichen, von der Isolatordurchführung für den Träger abgewandten Seite des Gehäuses befinden, ergibt sich eine besonders einfache und zweckmäßige Bauweise.

Die Vorrichtung kann gemäß einer Weiterbildung der Erfindung in konstruktiver Weise dadurch besonders einfach und zweckmäßig gestaltet werden, daß als Spülgas ein Teil des gereinigten Gases verwendet wird.

## Zeichnung

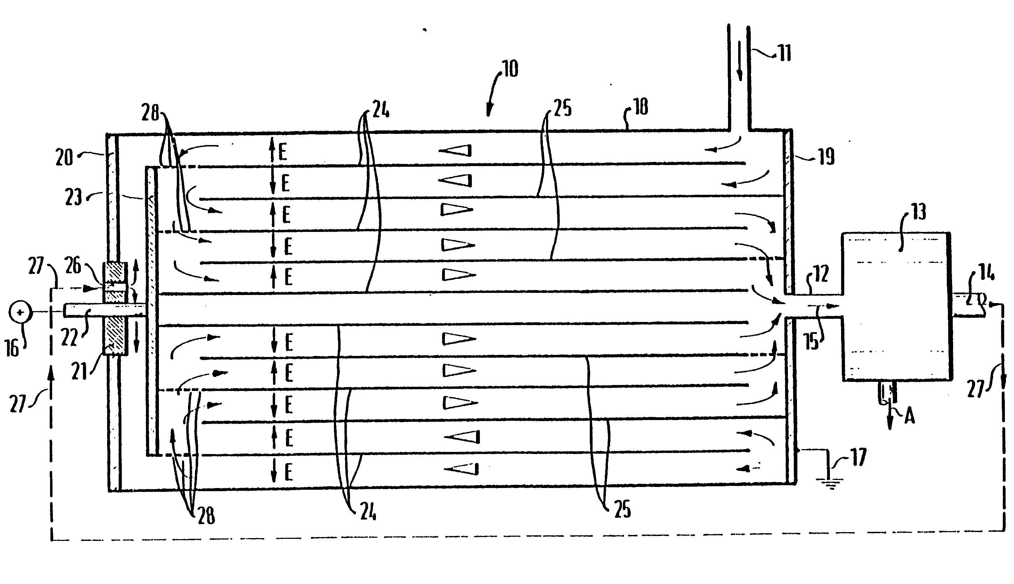

Ein Ausführungsbeispiel der Erfindung ist in der Zeichnung schematisch dargestellt und in der nachfolgenden Beschreibung näher erläutert. Die Figur zeigt eine erfindungsgemäße Vorrichtung mit zwei ineinandergeschechtelten Gruppen von baulich gleichartigen Elektroden.

## Beschreibung des Ausführungsbeispiels

Die Figur zeigt eine Vorrichtung zun Reinigen von Gasen. von elektrisch leitfähigen Partikeln wie Ruß und dgl., insbesondere zum reinigen von Abgasen fossiler Brennstoffe, vorzugsweise von Dieselmotoren. Darin ist mit 10 das Gehäuse eines sogenannten Agglonerators bezeichnet, dessen Aufgabe darin besteht, unter der Einwirkung eines elektrischen Hochspannungsfeldes ursprünglich kleine, fein verteilte Partikel in Gas zu größeren Agglomeraten zu vereinigen, welche mechanisch leicht abscheidbar sind. Die Gase erreichen das Gehäuse 10 über einen Einlaß 11 und verlassen es mit den agglomerierten Partikel über einen Auslaß 12 zu einem nur schematisch angedeuteten mechanischen Abscheider 13 hin. Aus diesem tritt das gereinigte Gas bei 14 aus, die leitfähigen Agglomerate verlassen den mechanischen Abscheider 13 über einen Auslaß A. Mit einem Pfeil 15 sind die aus dem Gehäuse 10 zum mechanischen Abscheider austretenden Gase bezeichnet.

Die das elektrische Feld E erzeugende Hochspannung wird einerseits an einen positiven Pol 16 und andererseits an einen Massepol 17 angelegt. Ein Gehäusemantel 18 besteht ebenso wie die beiden Stirnflächen 19 und 20 des Gehäuses 10 aus Metall, vorzugsweise aus Blech, so daß das gesamte Gehäuse auf Massepotential liegt. In die vom Gaseinlaß 11 abgewandten Stirnfläche 20 des Gehäuses 10 ist zentral ein Isolator 21 eingefügt, welcher die isolierte Halterung einer Stromdurchführung 22 zu einem Träger 23 für die positiven Elektroden 24 gewährleistet. Die negativen Elektroden sind mit 25 bezeichnet, sie sind elektrisch und mechanisch mit einer auf Masse liegenden Stirnfläche 19 des Gehäuses 10 verbunden.

Im Isolator 21 ist neben der Öffnung für die Stromdurchführung 22 ein Spülgaseinlaß 26 vorgesehen, durch welchen Spülgas in den der Stirnfläche 20 benachbarten Raum des Gehäuses 10 eintritt. Als Spülgas dient zweckmäßigerweise das am Auslaß zur Verfügung stehende gereinigte Gas, weil in diesem Fall mit geringstmöglichem Aufwand das Spülgas 27 zur Verfügung gestellt werden kann.

Beim Ausführungsbeispiel sind zur Erzielung einer konstanten Strömungsgeschwindigkeit die positiven Elektroden 24 nahe dem Träger 23 mit Öffnungen 28 für den Durchtritt des Gases versehen. Die Gasströmung innerhalb des Gehäuses 10 ist durch Pfeile markiert.

Die zuvor beschriebene Anordnung arbeitet folgendermaßen:

Das zu reinigende Gas tritt über den Einlaß 11 in das Gehäuse 10 ein und verteilt sich sofort entlang des Gehäuseumfanges in der durch die Pfeile gezeigten Weise. Das Gehäuse ist hierbei zweckmäßigerweise zylindrisch gestaltet, jedoch kommen auch andere Gehäuseformen als spezielle Bauformen oder entsprechend einem vorhandenen Einbauraum in Frage.

Das zu reinigende Gas strömt von der rechten Gehäuseseite durch die beiden äußeren Ringkanäle zur linken Gehäuseseite, tritt dort durch die Öffnungen 28 hindurch und strömt dann über die drei inneren Ringkanäle zurück zum Auslaß 12. Hierbei stehen die zu reinigenden Gase ständig unter der Einwirkung des elektrischen Feldes E, wodurch eine Polarisation der elektrisch leitfähigen Partikel auftritt, welche sich nun aufgrund ihrer elektrischen Ladungen zu größeren Agglomeraten zusammenballen. Das Gas mit diesen größeren Agglomeraten verläßt dann bei 15 das Gehäuse 10 und wird im Abscheider 13 in Rotation versetzt, wobei die relativ schweren Agglomerate nach außen wandern und hierdurch mechanisch leicht abgeschieden werden können.

Da das Gehäuse 10 auf Massepotential liegt besitzt die erfindungsgemäße Vorrichtung nur einen elektrischen Isolationsbereich um die Stromdurchführung 22 herum im Bereich des Isolators 21. Der Raum zwischen der Stirnfläche 20 und dem Träger 23 liegt jedoch nicht in der Gasströmung, so daß sich hier praktisch keine elektrisch leitfähigen Teile anlagern, welche am Isolator 21 zu Kriechströmen oder gar zu Überschlägen führen können. Da in diesem Raum kein Druckgefälle herrscht, findet hier nahezu keine Gasbewegung statt und es werden nahezu keine elektrisch leitfähigen Partikel in diesen Raum transportiert. Um dennoch die Sicherheit der Anlage weiter zu erhöhen wird über den Einlaß 26 Spülgas 27 in den Raum zwischen der Stirnfläche 20 und dem Träger 23 eingeführt, dessen Strömungsrichtung derjenigen des zureinigenden Gases entgegengesetzt ist, so daß das Eindringen elektrisch leitfähiger Partikel in diesem Raum praktisch wollständig verhindert wird.

## Patentansprüche

1. Vorrichtung zum Reinigen von Gasen von elektrisch leitfähigen Partikeln wie Ruß unter Verwendung eines von den zu reinigenden Gasen durchströmten elektrischen Hochspannungsfeldes, welches zwischen gegeneinander isolierten Elektroden anliegt und eines nachgeschalteten mechanischen Abscheiders für aus den elektrisch leitfähigen Partikeln gebildete Agglomerate, dadurch gekennzeichnet, daß die Elektroden (24, 25) aus zwei Gruppen becherartig ausgebildeter, konzentrisch zueinander angeordneter Elektrodenelemente (24, 25) bestehen, von denen eine erste Elektrodengruppe (24) gegenüber einem vom Gas durchströmten, elektrisch geerdeten Gehäuse (10) isoliert auf einem gemeinsamen Träger (23) angeordnet ist und die zweite Elektrodengruppe (25) an einer Stirnfläche (19) des Gehäuses (10) befestigt, gegenüber der ersten Elektrodengruppe isoliert derart angeordnet ist, daß die beiden Elektrodengruppen sich wenigstens teilweise durchdringen, daß ferner im Bereich der Isolation (21) des Trägers (23) der ersten Elektrodengruppe (24) Spülgas (27) in das Gehäuse eingelassen wird und daß bei einer oder beiden der Elektrodengruppen im Bereich des Bodenteils der becherartigen Elektrodenelemente Öffnungen (25) vorgesehen sind, über die mehrere der Elektrodenelemente zugleich gleichsinnig vom zu reinigenden Gas angeströmt werden.

2. Vorrichtung nach Anspruch 1, dadurch gekennzeichnet, daß als Spülgas (27) gereinigtes Gas (14) eingelassen wird.

3. Vorrichtung nach Ansprüchen 7 oder 2, dadurch gekennzeichnet, daß das Gehäuse (10) und die Stirnflächen (19, 20) aus Metall bestehen.

4. Vorrichtung nach Anspruch 1, dadurch gekennzeichnet, daß die Isolation (21) des Trägers (23) der ersten Elektrodengruppe (24) aus Keramik besteht.

5. Vorrichtung nach einem der vorhergehenden Ansprüche, dadurch gekennzeichnet, daß sich ein Einlaß (11) für das zu reinigende Gas und ein Auslaß (12) zum nachgeschalteten mechanischen Abscheider (13) auf der gleichen, von der Isolatordurchführung (21) für den Träger (23) abgewandten Seite des Gehäuses (10) befinden.

## Claims

1. Device for purifying gases by removal of electrically conductive particles such as soot, using a high-voltage electric field, through which the gases to be purified flow and which is applied between two electrodes insulated from one another, and a downstream mechanical separator for the agglomerates formed from the electrically conductive particles, characterized in that that the electrodes (24, 25) consist of two groups of cup-shaped electrode elements (24, 25) which are arranged concentrically to one another and of which a first electrode group (24) is arranged, with insulation, on a common carrier (23) opposite an electrically earthed housing (10) bearing the gas flow and a second electrode group (25) is fixed, insulated from the first electrode group, to one end face (19) of the housing (10) in such a way that the two electrode groups at least partially penetrate each other, that, in addition, in the region of the insulation (21) of the carrier (23) of the first electrode group (24), flushing gas (27) is introduced into the housing, and that, in one or both of the electrode groups, orifices (28), through which gas to be purified flows simultaneously and in the same direction towards several of the electrode elements, are provided in the region of the bottom part of the cup-shaped electrode elements.

2. Device according to Claim 1, characterized in that purified gas (14) is introduced as the flushing gas (27).

3. Device according to Claims 1 or 2, characterized in that the housing (10) and the end faces (19, 20) consist of metal.

4. Device according to Claim 1, characterized in that the insulation (21) of the carrier (23) of the first electrode group (24) consists of ceramics.

5. Device according to one of the preceding claims, characterized in that one inlet (11) for the gas to be purified and one outlet (12) leading to the downstream mechanical separator (13) are located on the same side of the housing (10) remote from the insulator bushing (21) for the carrier (23).

## Revendications

1.- Dispositif pour débarrasser des gaz de particules électriquement conductrices, telles que de la suie, en utilisant un champ électrique haute tension traversé par les gaz à purifier, ce champ étant produit entre des électrodes isolées les unes des autres, et en utilisant un séparateur mécanique branché à la suite pour séparer les agglomérats formés à partir des particules électriquement conductrices, dispositif caractérisé en ce que les électrodes (24, 25) sont constituées de deux groupes d'éléments d'électrodes (24, 25) en forme de godets disposés concentriquement les uns par rapport aux autres, un premier groupe d'électrodes (24) étant disposé sur un support commun (23) en étant isolé par rapport à un carter (10) parcouru par le gaz et mis électriquement à la terre, tandis que le deuxième groupe d'électrodes (25), fixé sur une face frontale (19) du carter (10) et isolé par rapport au premier groupe d'électrodes, est disposé par rapport à ce premier groupe de façon que les deux groupes d'électrodes s'interpénètrent au moins partiellement, du gaz de balayage (27) étant en outre admis dans le carter au voisinage de l'isolation (21) du support (23) du premier groupe d'électrodes (24), et des orifices (28) étant prévus pour l'un des groupes d'électrodes ou pour les deux au voisinage de la partie de fond des éléments d'électrodes en forme de godets, orifices par l'intermédiaire desquels, plusieurs des éléments d'électrodes sont parcourus simultanément dans le même sens par le gaz à épurer.

2.- Dispositif selon la revendication 1, caractérisé en ce que du gaz épuré (14) est admis en tant que gaz de balayage (27).

3.- Dispositif selon les revendications 1 ou 2, caractérisé en ce que le carter (10) et les faces frontales (19, 20) sont en métal.

4.- Dispositif selon la revendication 1, caractérisé en ce que l'isolation (21) du support (23) du premier groupe d'électrodes (24) est en céramique.

5.- Dispositif selon une des précédentes revendications, caractérisé en ce qu'une admission (11) pour le gaz à purifier et une évacuation (12) vers le séparateur mécanique (13) branché à la suite, sont situées sur le même côté, opposé à l'isolateur (21) pour le support (23), du carter (10).